# EUROPEAN PATENT APPLICATION

(11) **EP 4 517 510 A1**
(43) Date of publication of application: **05.03.2025**
(21) Application number: 23194868.8
(22) Date of filing: 01.09.2023
(51) Int. Cl.: G06F 3/12

(54) **METHOD AND SYSTEM FOR SECURE PRINT ROAMING**

(71) Applicant: ELATEC GmbH, 82178 Puchheim (DE)
(72) Inventor: Finkenzeller, Klaus, 85774 Unterföhring (DE); Zappel, Dietmar, 71638 Ludwigsburg (DE)
(74) Representative: Lohr, Jöstingmeier & Partner

(57) **Abstract**

A method of secure print roaming, the method comprising the steps of: generating of a print job associated with an ID and sending the print job to a first cloud print service, reading the ID by an ID reader at a cloud-enabled printer, forwarding the ID to a second cloud print service, the second cloud print service (212) issuing a roaming request to the first cloud print service based on the ID, the first cloud print service transmitting the print job to the second cloud print service, and routing of the print job to the cloud-enabled printer.

## Description

### Field of the invention

The invention relates to a method and a system for secure printing of documents. Print jobs can be securely roamed between different cloud print services.

### Description of the related art

When someone prints a file, the document usually reaches the output tray of a printer within seconds. Until the user who submitted the print job arrives at the printer, the output waits there unattended. If another user is at the printer at that moment, that user can view the printed document or even take it.

Secure printing, known from EP 0935182 A1 provides a solution to that problem. With secure printing, also known as Pull-Printing or Follow-Me-Printing, printouts are not output directly with the printing process on the selected printer. Instead, they are held until the user identifies himself at the printer and authorizes the output. Pull printing offers many business benefits. It protects sensitive information during the printing process, reduces costs by eliminating unclaimed documents, and increases user mobility and productivity by allowing them to print anytime, anywhere.

An improved approach is disclosed in US 2014/0002845 A1. Here, printers are controlled via a cloud and a print job is assigned to the correct printer via a cloud print service. The advantage of this system is that no local print server needs to be installed and Managed Print solutions can be installed at any time via the cloud.

Typically, access to a cloud print service can only be used to print within a closed application. Thus, although a print job can be submitted via any Internet access, the printout can only be made on printers that are assigned to an organizational unit. Usually this is limited to printers of the own company. If you want to print to a (network/cloud) printer in another company, for example in a hotel, this usually only works by forwarding the file to be printed to a person (e.g., concierge in a hotel) who has access to the printers in the respective company. However, this can very easily compromise data, as the owner of the file loses control over the file by passing it on to a third party.

### Summary of the invention

The problem to be solved by the invention is to provide a method and a system with which it is possible to output print jobs on any cloud enabled printer by means of secure print, even when the print job was submitted to a cloud printing service different from the printer's service.

Solutions of the problem are described in the independent claims. The dependent claims relate to further improvements of the invention.

Forwarding a print job from one cloud print service to another, is further referred to as roaming.

The invention is intended to enable a user to send a print job to a first cloud print service associated with the user, and to output it on a printer operated at a second cloud print service.

An embodiment relates to a method of secure printing of documents.

In a first step a print job is generated and sent to a first cloud print service.

In the next step, an ID reader associated to a cloud enabled printer reads an ID from an ID carrier, e.g., of the user who generated the print job or any user who is authorized to receive the printout of the print job.

The ID includes at least one of: a unique identifier (personal ID) of a user, and a unique identifier of the first cloud print service, and the ID may further include a one-time password. The ID may comprise at least one UUID and further information, which may be required for processing. The ID may be modified during the different steps. So additional data may be added, or parts may be removed. For example, the ID sent from the ID reader may contain information about the first cloud print service, which may be removed for the roaming request from the second cloud print service to the first cloud print service.

In a further step, the ID is forwarded to a second cloud print service to which the cloud-enabled printer may be connected and registered. Forwarding may be done by the ID reader and/or the cloud enabled printer.

In another step, the second cloud print service now recognizes from the ID that the job to be printed has been sent to the first cloud print service.

For serving the print job, a roaming procedure is initiated in the next step. The second cloud print service sends the ID and, if necessary, further data, e.g., for billing the service, to the first cloud print service, together with a roaming request.

Then, the first cloud print service, on which the previously generated print job is still stored, checks the validity of the ID and may verify an optional OTP in the ID. If the correctness of the ID and e.g., the OTP can be confirmed, the first cloud print service executes the roaming request and transmits the print job in another step to the requesting second cloud print service.

In a last step, the print job is routed to the cloud-enabled printer to be printed out.

In another embodiment of the method, an SNS (Service Name Server) is provided. If the second cloud print service receives a request from a user who has sent his print job to a first cloud print service, the requested second cloud print service may not have the information about which URL the first cloud print service can be reached for a roaming request. Therefore, the requested second cloud print service sends a URL request to the SNS. The SNS has a current database of all cloud print services participating in the method and the respective valid URL for a roaming request. The requested URL information is read from this database and sent back to the requesting second cloud print service. The service can now execute the roaming request as described above.

An embodiment relates to a system for secure print roaming.

A print job may be stored on first cloud print service. At least one cloud-enabled printer is connected e.g., via an Internet connection for printing with at least one second cloud print service. An ID, which may be on an ID carrier is read by an ID reader. The ID may be an ID as defined above and it may identify a user. The ID reader is configured to forward the ID to the second cloud print service.

The ID carrier may be a contactless ID carrier, which further may be a contactless smart card (RFID), a credential, or a software application in a Bluetooth or NFC-enabled smartphone. The ID carrier is configured to communicate with the ID reader or may at least be read by the ID reader. In an alternate embodiment, the ID carrier may have contacts, e.g., an USB connector. In a further embodiment, the ID carrier may be a QR-Code. Such a QR-Code may be generated dynamically and may contain the TOTP. Such a QR code may only be used once. It may be stored on a mobile device and may be presented to the ID reader. Communication with the ID reader may be made in a contactless way via RFID or NFC, or in a remote way e.g. via Bluetooth, or in an optical way via a dynamically generated optical readable code e.g. a QR-code shown at the display. For the latter case, the ID reader may include a camera. The ID reader may be configured for such communications.

The ID carrier may have at least one means for securely generating a one-time password (OTP). In the case of a smart card, this may be a counter controlled HOTP. In the case of a smartphone, it may be a HOTP or a time controlled TOTP. The OTP may be verified by an OTP server.

The ID reader may be an NFC reader and may support at least one of RFID and NFC and Bluetooth. After a second cloud print service is selected, the ID reader is connected e.g., by using a first link to the second cloud print service and configured for transmitting thereto the ID or information about the ID, e.g., a hash value.

The second cloud print service requests roaming of the print job (the data to be printed) from the first cloud print service. Then the first cloud print service verifies the ID and forwards the print job to the second cloud print service. The second cloud print service then forwards the print job (printing data) to the printer.

In a very simple embodiment, the first link includes a firmware located on the at least one cloud-enabled printer, that controls the ID reader. The ID reader may be connected by an USB interface to the at least one cloud-enabled printer and forwards an ID read from the ID carrier via the printer to the second cloud print service.

In another embodiment, the ID reader may be configured to forward the ID to the first cloud print service and to issue a roaming request.

In an embodiment, the ID reader comprises a LoRaWAN transceiver configured to transmit an ID via at least one LoRaWAN gateway to a an optional LoRa-Network server (LNS) or an optional MQTT broker. The LoRa-Network server is configured to transfer the ID directly or via Internet to the second cloud print service. For addressing the second cloud print service, the ID reader may provide, e.g., included into the ID a network address, e.g., IP address or URL.

In another embodiment, the ID reader comprises a LoRaWAN transceiver configured to transmit an ID via at least one LoRaWAN gateway to a LoRa-Network server which is configured to transfer the ID via Internet to the second cloud print service.

In another embodiment, the ID reader is configured to transmit an ID via at least one of a LPWAN/WLAN technology, like NB-loT, WiFi HaLow, Thread, WiFi which further forwards the ID via Internet to the second cloud print service.

Another embodiment relates to an access control system.

Normally, the data carriers and the credentials stored on them are only known within a closed access system, e.g., Site 1. If a user goes to another site 2 with an independent access system, the data carrier is not known there, and the user is rejected by this system.

There may be use cases where it makes sense to grant access to own buildings and properties to a previously unknown user. For example, a student visiting a friendly university (Site 2) in a neighboring town could be granted access to certain non-critical areas, such as the cafeteria or library, provided that the authenticity of the user can be proven to the friendly university.

Site 2 is initially unaware of the user with an ID carrier and an ID, since the user is only registered and known in Site 1 (e.g., a student enrolled in university 1). If the user holds his data carrier to a reader assigned to site 2, it is determined that the user and the corresponding data carrier are not known there. The reader then reads an ID from the data carrier, which may include the user ID, a TOTP token and an identifier of the site at which this user is registered. This ID or parts thereof e.g., the data record may be forwarded to the Site 2 control system. The control system of site 2 now asks site 1 whether this user is known there and still has valid authorizations. For this purpose, the currently generated TOTP token may be sent to the control system of site 1 in addition to the user ID. Site 1 checks whether the user is still registered there as valid and uses the TOTP token to verify the authenticity of the user. For this purpose, the TOTP token may be routed to an associated OTP server, which checks the validity of the TOTP token.

If the OTP check is positive, Site 1 confirms the authenticity to the requesting Site 2. Site 2 then grants the user access to certain defined areas.

To avoid having to repeat the request to site 1 for each read operation, site 2 can also write a credential itself to data carrier 11, which grants the user "default access" to its own rooms, at least for a limited time period.

### Description of Drawings

In the following the invention will be described by way of example, without limitation of the general inventive concept, on examples of embodiment with reference to the drawings.
Figure 1 shows a first embodiment.
Figure 2 shows an embodiment with LPWAN
Figure 3 shows an embodiment of an access control system.
Figure 4 shows a flow diagram of a method.

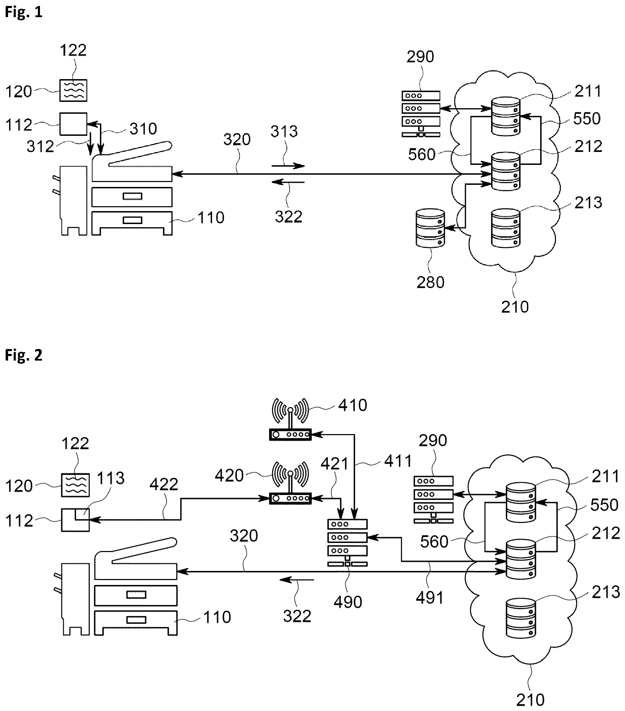

Figure 1 shows a first embodiment. At least one cloud-enabled printer 110 is connected e.g., via a normal internet connection 320 for printing to at least one cloud print service 211, 212, 213 (e.g. Printex, Microsoft Universal Print, etc.). In this figure, a connection of a cloud-enabled printer 110 to a second cloud print service 212 is shown. Further, a print job is stored on first cloud print service 211. The control of an output on the at least one printer is performed by a secure print mechanism. A user is identified by means of an ID 122 on a carrier 120 from which an ID 122 is read by an ID reader 112. The ID reader 112 is configured to forward the ID 122 to at least one of the at least two cloud print services 211, 212, 213, in this specific case to the same cloud print service as cloud-enabled printer 110 is connected to, namely the second cloud print service 212.

For the purpose of identification, a user may have a preferably contactless ID carrier 120, which may be a contactless smart card (RFID), a credential, or a software application in a Bluetooth or NFC-enabled smartphone and which is configured to communicate with the ID reader 112.

The ID carrier 120 may have at least one means for securely generating a one-time password (OTP). In the case of a smart card, this may be a counter controlled HOTP. In the case of a smartphone, it may be a HOTP or a time controlled TOTP. The OTP may be verified by OTP server 290.

The ID reader 112, may be an NFC reader and may support at least one of RFID and NFC and Bluetooth. After a second cloud print service 212 is selected from the at least two cloud print services 211, 212, 213, the ID reader 112 is connected e.g., by using a first link 310 to the second cloud print service 212 and configured for transmitting 312, 313 thereto the ID 122 or information about the ID 122, e.g., a hash value.

After receiving the ID, the second cloud print service 212 requests roaming of the print job (the data to be printed) from the first cloud print service 211, which after authentication of the ID 122 (and therefore the user) forwards the print job to the second cloud print service 212 and which further forwards 322 printing data 320 to the printer 110.

In a very simple embodiment, the first link 310 includes a firmware located on the at least one cloud-enabled printer 110, that controls the ID reader 112. The ID reader 112 may be connected by an USB interface to the at least one cloud-enabled printer 110 and forwards an ID 122 read from the ID carrier 120 via the printer to the first cloud print service 211.

Figure 2 shows an embodiment with LPWAN. Here, the first link 310 may include an LPWAN (Low-Power, Wide-Area Network), for example a LoRaWAN (Long Range Wide Area Network). Here, the ID reader 112 may include a LoRaWAN transceiver 113 further including a radio interface. The ID reader 112 transmits an ID 122 read from the ID carrier 120 together with at least one ID 122 via the LoRaWAN transceiver 113 to at least one LoRaWAN gateway 410, 420 located within range. From the at least one LoRaWAN gateway 410, 420, the received identification data is sent via LoRaWAN server connections 411, 421 to a LoRa-Network server (LNS) 490, which further forwards the ID 122 via Internet to the second cloud print service 212. In this figure a connection 422 to the LoRaWAN gateway 420 is shown. The LoRa-Network server 490 may, based on the ID 122 and further information from the LoRaWAN transceiver 113, forward the received ID 122 to the first cloud print service 211 which is associated with the ID 122 via an internet connection 491. The advantage in using an LPWAN being part of the ID reader 112, is that the cloud-enabled printer 110 does not need to have special firmware to control the ID reader 112.

Further, the at least one cloud print service 211, 212, 213 may include or may be connected to an OTP server 290 that allows verification of the one-time password (OTP). The most widespread OTP variants are the HOTP and TOTP methods. The abbreviation TOTP stands for Time-based One-time Password Algorithm. It is a procedure that generates time-limited, one-time passwords for logging on to a system. In contrast to HOTP (HMAC-based One-time Password), the procedure is time-based and not event-driven. In addition, there is no validation window with multiple simultaneously valid passwords. The Initiative For Open Authentication (OATH) developed the procedure. It is standardized in RFC 6238, published in 2011. If unauthorized persons gain knowledge of a TOTP password, they can hardly use it because it loses its validity after a short time.

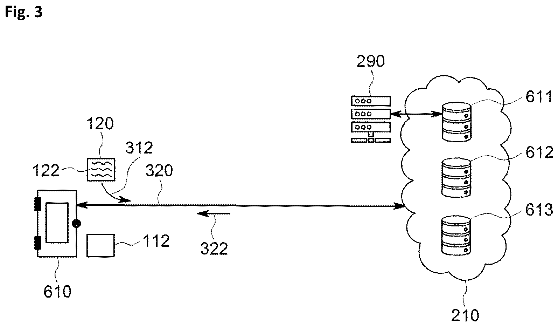

Figure 3 shows an embodiment of an access control system.

A door may have an associated ID reader 112 for reading and ID 122 from an ID carrier 120. The ID reader 112 may forward an authentication request to a second authentication server 612 out of a plurality of authentication servers 611, 612, 613. The second authentication server 612 does not know the ID 122 and therefore forwards the ID 122 to the first authentication server 211 together with a roaming request. The first authentication server 211 then forwards a confirmation to the second authentication server 612 after verifying the ID. This confirmation is further forwarded by the second authentication server 612 to the access control device 610, which may be a door for opening.

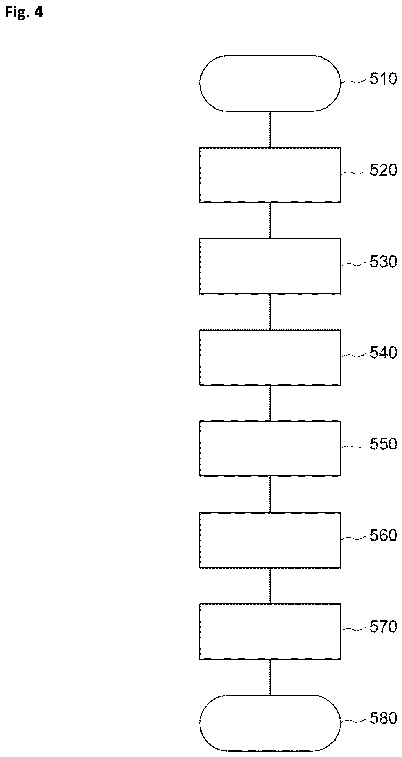

Figure 4 shows a flow diagram of a method of secure printing of documents. In a first step 520 of the method starting with 510, a user generates a print job and sends it to a first cloud print service 211 after selecting the first cloud print service 211 from the at least two cloud print services 211, 212, 213. The first cloud print service 211 may be an associated cloud print service to which the user is logged in. This usually requires prior registration with a cloud print service.

In the next step 530, an ID reader 112 associated to a cloud enabled printer 110 reads an ID 122 from an ID carrier 122, e.g., of the user who generated the print job or any user who is authorized to receive the printout of the print job. The user may hold his contactless ID carrier 120 against the ID reader 112 associated with the corresponding cloud enabled printer 110.

The ID 122 may include among other possibly cryptographically protected data, some data fields, including at least one of a unique identifier (personal ID) of the user, a unique identifier of the cloud print service with which the user is contractually associated (here the print job to be printed is located), and a one-time password. It is understood that the user's personal ID may also be structured such that the cloud print service used by the user may be derived from the personal ID.

By means of a first link 310, the read ID 122 is forwarded in step 540 to a second cloud print service 212 to which the cloud-enabled printer 110 is connected and registered.

The second cloud print service 212 now recognizes from the ID 122 that the job to be printed has been sent to the first cloud print service 211. In order to now be able to serve the print job, a roaming procedure is initiated in step 550. For this purpose, the requested cloud print service (here the second cloud print service 212) sends the user's personal ID e.g., together with a read OTP and, if necessary, further data, e.g., for billing the service, to the user's contractual cloud print service (first cloud print service 211), thereby executing a roaming request.

The first cloud print service 211, on which the previously generated print job is still stored, now checks the validity of the user's personal ID and e.g., the OTP sent. If the correctness of the ID and e.g., the OTP can be confirmed, the first cloud print service 211 now executes the roaming request and transmits the print job in step 560 to the requesting second cloud print service 212.

In a step 570, the print job is now routed to the cloud-enabled printer 110 whose associated NFC reader was used to read the user's ID carrier 120.

The method ends with 580.

In another embodiment of the method, an SNS (Service Name Server) 280 is operated and made available. If the second cloud print service 212 in step 540 receives a request about a print job at the first cloud print service 211 which may e.g., be a third-party cloud print service, the second cloud print service 212 may not have the information about which URL the first cloud print service 211 can be reached for a roaming request. In this case, the second cloud print service sends a URL request to the SNS 280. The SNS 280 has a current database of all cloud print services participating in the method and the respective valid URL for a roaming request. The requested URL information is read from this database and sent back to the second cloud print service 212. So, the second cloud print service 212 receives back an URL of the first cloud print service 211. The second cloud print service 212 can now execute the roaming request as described above.

### List of reference numerals

- 110: cloud-enabled printer
- 112: ID reader
- 113: LoRaWAN transceiver
- 120: ID carrier
- 122: ID
- 210: cloud
- 211: first cloud print service
- 212: second cloud print service
- 213: third cloud print service
- 280: Service Name Server (SNS)
- 290: OTP server
- 310: first link
- 312, 313: forwarding ID
- 320: Internet connection
- 322: forwarding printing data
- 410: first LoRaWAN gateway
- 411: first LoRaWAN server connection
- 420: second LoRaWAN gateway
- 421: second LoRaWAN server connection
- 422: LoRaWAN connection to LoRaWAN transceiver
- 490: LoRa-Network server
- 491: Internet connection
- 510: method start
- 520: generating of print job and sending it to a first cloud print service
- 530: reading an ID by an ID reader at a cloud-enabled printer
- 540: forwarding the ID to a second cloud print service to which the cloud-enabled printer is connected and registered
- 550: the second cloud print service issuing a roaming request to the first cloud print service based on the ID
- 560: the first cloud print service transmits the print job to the second cloud print service
- 570: routing of the print job to the cloud-enabled printer
- 580: method end
- 610: access control device
- 611: first authentication server
- 612: second authentication server
- 613: third authentication server

## Claims

1. A method of secure print roaming, the method comprising the steps of:
a. generating of a print job associated with an ID (122) and sending the print job to a first cloud print service (211)
b. reading the ID (122) by an ID reader (112) at a cloud-enabled printer (110)
c. forwarding the ID (122) to a second cloud print service
d. the second cloud print service (212) issuing a roaming request to the first cloud print service (211) based on the ID
e. the first cloud print service (211) transmitting the print job to the second cloud print service (212)
f. routing of the print job to the cloud-enabled printer (110)

2. The method according to claim 1,
**characterized in, that**
executing before step b. the step of:
connecting and registering the cloud-enabled printer (110) to the second cloud print service (212).

3. The method according to any of the previous claims,
**characterized in, that**
the ID (122) comprises at least one of:
- a unique identifier (personal ID) of a user, and
- a unique identifier of the first cloud print service.

4. The method according to the previous claim,
**characterized in, that**
the ID (122) further comprises a one-time password (OTP).

5. The method according to any of the previous claims,
**characterized in, that**
the first cloud print service (211) verifies the ID (122) before transmitting the print job to the second cloud print service (212) in step e.

6. The method according to any of the previous claims,
**characterized in, that**
before issuing a roaming request in step d., the second cloud print service (212) sends a URL request to a Service Name Server SNS (280) and receives back an URL of the first cloud print service (211).

7. The method according to any of the previous claims,
**characterized in, that**
the ID reader 112 transmits an ID 122 via a LoRaWAN transceiver 113 to at least one LoRaWAN gateway 410, 420 located within range, and the at least one LoRaWAN gateway 410, 420, sends the received identification data to at least one of a LoRa-Network server (LNS), and a MQTT broker 490, which further forwards the ID 122 via Internet to the second cloud print service 212.

8. The method according to any of claims 1 to 6,
**characterized in, that**
the ID reader 112 transmits an ID 122 via at least one of a LPWAN/WLAN technology, like NB-loT, WiFi HaLow, Thread, WiFi which further forwards the ID 122 via Internet to the second cloud print service 212.

9. A system for secure print roaming, the system comprising at least:
- at least one cloud-enabled printer (110) being connected for printing with at least one second cloud print service (212),
- an ID reader (112) configured to read an ID (122) on an ID carrier (120) and to forward the ID to the to at least one second cloud print service (212),
- wherein
- the second cloud print service (212) is configured to after receiving the ID (122), requesting roaming of the print job from the first cloud print service (211), and transmitting the ID (122) to the first cloud print service, (211)
- the first cloud print service (211) is configured to after receiving the ID (122) to verify the ID (122) and to forward the print job to the second cloud print service (212)
- the second cloud print service (212) being configured to then forward the print job to the cloud-enabled printer (110).

10. A system for secure print roaming according to claim 9,
- **characterized in, that**
- the ID carrier (120) may be a contactless ID carrier, which may be a contactless smart card (RFID), a credential, or a software application in a Bluetooth or NFC-enabled smartphone, and which may be configured to communicate with the ID reader (112).

11. A system for secure print roaming according to claim 9 or 10,
- **characterized in, that**
- the ID carrier (120) may have at least one means for securely generating a one-time password (OTP).

12. A system for secure print roaming according to any of claims 9 to 11,
- **characterized in, that**
- the ID carrier (120) may be a QR-Code which may include a TOTP.

13. A system for secure print roaming according to any of claims 9 to 11, **characterized in, that**
The ID reader may be a NFC reader and may support at least one of RFID and NFC and Bluetooth.

14. A system for secure print roaming according to any of claims claim 9 to 12,
**characterized in, that**
an SNS (Service Name Server) is provided, and the second cloud print service (212) is configured to query the SNS for the first cloud print service (211).

15. A system for secure print roaming according to any of claims claim 9 to 13,
**characterized in, that**
the ID reader (112) comprises a LoRaWAN transceiver (113) configured to transmit an ID (122) via at least one LoRaWAN gateway (410), (420) to a LoRa-Network-server (LNS) (490), which is configured to transfer the ID (122) via Internet to the second cloud print service (212) or
the ID reader 112 transmits an ID 122 via at least one of a LPWAN/WLAN technology, like NB-loT, WiFi HaLow, Thread, WiFi which further forwards the ID 122 via Internet to the second cloud print service 212.
